# EUROPEAN PATENT APPLICATION

(11) **EP 4 358 388 A1**
(43) Date of publication of application: **24.04.2024**
(21) Application number: 21958870.4
(22) Date of filing: 30.09.2021
(51) Int. Cl.: H02M 7/219

(54) **VIENNA RECTIFIER, CONTROL METHOD FOR VIENNA RECTIFIER, AND CHARGING PILE**

(71) Applicant: Huawei Digital Power Technologies Co., Ltd., Shenzhen, Guangdong 518043 (CN)
(72) Inventor: LIANG, Zhigang, Shenzhen, Guangdong 518129 (CN); MENG, Yuandong, Shenzhen, Guangdong 518129 (CN); ZENG, Tao, Shenzhen, Guangdong 518129 (CN); ZOU, Lixia, Shenzhen, Guangdong 518129 (CN); YAN, Chao, Shenzhen, Guangdong 518129 (CN)
(74) Representative: Gill Jennings & Every LLP
(86) International application number: PCT/CN2021/122131
(87) International publication number: WO 2023/050296

(57) **Abstract**

This application discloses a Vienna rectifier, a Vienna rectifier control method, and a charging pile, and relates to the field of circuit technologies. The Vienna rectifier includes a three-phase rectifier circuit and a controller. When a voltage phase of an i^{th}-phase rectifier circuit of the three-phase rectifier circuit precedes a current phase of the i^{th}-phase rectifier circuit by a first angle, the controller controls a switch of the i^{th}-phase rectifier circuit to be turned on within a second angle after a voltage of the i^{th}-phase rectifier circuit reaches a zero crossing point, where the second angle is greater than or equal to the first angle; and when the current phase of the i^{th}-phase rectifier circuit of the three-phase rectifier circuit precedes the voltage phase of the i^{th}-phase rectifier circuit by the first angle, the controller controls the switch of the i^{th}-phase rectifier circuit to be turned on within a third angle before the voltage of the i^{th}-phase rectifier circuit reaches the zero crossing point, where the third angle is greater than or equal to the first angle, and i=1, 2, or 3. The Vienna rectifier provided in this application supports reactive power adjustment, improves practicability, and reduces hardware costs of the charging pile.

## Description

### TECHNICAL FIELD

This application relates to the field of circuit technologies, and in particular, to a Vienna rectifier, a Vienna rectifier control method, and a charging pile.

### BACKGROUND

With aggravation of energy shortage and environmental pollution in modern society, as new energy vehicles, electric vehicles have attracted extensive attention from all walks of life. An electric vehicle is powered by a power battery pack, and a charging pile converts an alternating current (Alternating Current, AC) into a direct current (Direct Current, DC) to charge the power battery pack.

When an input end of the charging pile is connected to a three-phase alternating current, a circuit of the charging pile includes a Vienna (Vienna) rectifier and a direct current/direct current converter. The Vienna rectifier is configured to convert the three-phase alternating current into a direct current and transmit the direct current to the direct current/direct current converter. The direct current/direct current converter is configured to perform direct current conversion on the direct current and output a converted direct current, to charge the power battery pack of the electric vehicle. A power factor of the existing Vienna rectifier during work is usually 1, to reduce a power transmission loss.

A large charging station or a charging station in an industrial and commercial park that uses a Vienna rectifier usually has both an active load and a reactive load. An additional reactive power compensation device usually needs to be installed, to ensure that a power factor of the entire charging station or the entire industrial and commercial park is 1. If a charging pile has a reactive power adjustment/compensation function, costs of purchasing the additional device can be greatly reduced. However, the existing Vienna rectifier used cannot implement reactive power adjustment, has low practicability, and needs to be provided with an additional reactive power compensation device. Consequently, hardware costs of the large charging station or the charging station in the industrial and commercial park are increased.

### SUMMARY

This application provides a Vienna rectifier, a Vienna rectifier control method, and a charging pile, to implement reactive power adjustment, improve practicability, and reduce hardware costs.

According to a first aspect, this application provides a Vienna rectifier. An input end of the Vienna rectifier is connected to a three-phase alternating current circuit. The Vienna rectifier includes a three-phase rectifier circuit and a controller. An input end of each-phase rectifier circuit of the three-phase rectifier circuit is configured to connect to a one-phase alternating current source of a three-phase alternating current source. An output end of each-phase rectifier circuit of the three-phase rectifier circuit is configured to connect to an output end of the Vienna rectifier. When a voltage phase of an i^{th}-phase rectifier circuit precedes a current phase of the i^{th}-phase rectifier circuit by a first angle, the controller controls a switch of the i^{th}-phase rectifier circuit to be turned on within a second angle after a voltage of the i^{th}-phase rectifier circuit reaches a zero crossing point. The second angle is greater than the first angle. When the current phase of the i^{th}-phase rectifier circuit of the three-phase rectifier circuit precedes the voltage phase of the i^{th}-phase rectifier circuit by the first angle, the controller controls the switch of the i^{th}-phase rectifier circuit to be turned on within a third angle before the voltage of the i^{th}-phase rectifier circuit reaches the zero crossing point. The third angle is greater than the first angle, and i=1, 2, or 3.

When the voltage phase of the i^{th}-phase rectifier circuit in the Vienna rectifier provided in this application precedes or lags behind the current phase of the i^{th}-phase rectifier circuit, a power factor of the Vienna rectifier during work is less than 1. When the voltage phase of the i^{th}-phase rectifier circuit precedes a current by the first angle, the controller controls the switch of the i^{th}-phase rectifier circuit to be turned on within the second angle after the voltage reaches the zero crossing point, to provide a freewheeling path for the i^{th}-phase rectifier circuit. Because the second angle is greater than or equal to the first angle, the current of the i^{th}-phase rectifier circuit does not suddenly change to zero but gradually decreases to zero after the voltage reaches the voltage zero crossing point. This prevents the current from generating a current platform near a current zero crossing point, to maintain a current waveform as a sine wave. When the current phase of the i^{th}-phase rectifier circuit precedes the voltage by the first angle, a current waveform can be maintained as a sine wave likewise. In this way, reactive power adjustment is implemented and practicability is improved. When a charging pile uses the Vienna rectifier as a power factor correction circuit, no additional reactive power adjustment apparatus may be disposed. This reduces hardware costs of the charging pile.

In a possible implementation, the second angle is less than or equal to 30°, and the third angle is less than or equal to 30°.

To be specific, for each-phase rectifier circuit in the Vienna rectifier, a maximum angle at which a phase voltage precedes a phase current is 30°, and a corresponding power factor is cos(30)°, which is approximately 0.866; and a maximum angle at which the phase voltage lags behind the phase current is 30°, and a corresponding power factor is -cos(30)°, which is approximately -0.866. Therefore, an absolute value of the power factor can be adjusted between [0.866, 1].

In a possible implementation, the controller is specifically configured to: when the voltage phase of the i^{th}-phase rectifier circuit precedes the current phase of the i^{th}-phase rectifier circuit by the first angle, control the switch of the i^{th}-phase rectifier circuit to be turned on within a range from a fourth angle before the voltage of the i^{th}-phase rectifier circuit reaches the zero crossing point to the second angle after the voltage of the i^{th}-phase rectifier circuit reaches the zero crossing point; and when the current phase of the i^{th}-phase rectifier circuit precedes the voltage phase of the i^{th}-phase rectifier circuit by the first angle, control the switch of the i^{th}-phase rectifier circuit to be turned on within a range from a fifth angle before the voltage of the i^{th}-phase rectifier circuit reaches the zero crossing point to the third angle after the voltage of the i^{th}-phase rectifier circuit reaches the zero crossing point, where the fourth angle is less than or equal to the second angle, and the fifth angle is less than or equal to the third angle.

In a possible implementation, the fourth angle is equal to the fifth angle.

In a possible implementation, the second angle is equal to the third angle.

When the fourth angle is equal to the fifth angle and the second angle is equal to the third angle in the foregoing implementations, symmetry of a common-mode voltage can be improved, so that the common-mode voltage is smoother, and the Vienna rectifier can run more stably. In addition, control difficulty of the controller is further simplified, and it is convenient for the controller to control the switch.

In a possible implementation, the Vienna rectifier includes a positive direct current bus and a negative direct current bus, the switch of the i^{th}-phase rectifier circuit includes a first switching transistor and a second switching transistor, and the i^{th}-phase rectifier circuit further includes a first diode and a second diode. An anode of the first diode is connected to an input end of the i^{th}-phase rectifier circuit, a cathode of the first diode is connected to the positive direct current bus, the anode of the first diode is connected to a cathode of the second diode, and an anode of the second diode is connected to the negative direct current bus. The anode of the first diode is connected to a first end of the first switching transistor, a second end of the first switching transistor is connected to a second end of the second switching transistor, and a first end of the second switching transistor is connected to a bus midpoint of the positive direct current bus and the negative direct current bus.

In a possible implementation, the Vienna rectifier includes a positive direct current bus and a negative direct current bus, the switch of the i^{th}-phase rectifier circuit includes a first switching transistor and a second switching transistor, and the i^{th}-phase rectifier circuit further includes a first diode, a second diode, a third switching transistor, a fourth switching transistor, and a transformer. A first end of a primary-side winding of the transformer is connected to an anode of the first diode and a first end of the first switching transistor, a second end of the primary-side winding of the transformer is connected to a first end of a secondary-side winding of the transformer and an input end of the i^{th}-phase rectifier circuit, and a second end of the secondary-side winding of the transformer is connected to a first end of the second switching transistor. A second end of the first switching transistor and a second end of the second switching transistor are connected to a bus midpoint of the positive direct current bus and the negative direct current bus. The first end of the primary-side winding of the transformer is connected to the anode of the first diode and a cathode of the second diode, a cathode of the first diode is connected to the positive direct current bus, and an anode of the second diode is connected to the negative direct current bus. The second end of the secondary-side winding of the transformer is connected to an anode of the third switching transistor and a cathode of the fourth switching transistor, a cathode of the third switching transistor is connected to the positive direct current bus, and an anode of the fourth switching transistor is connected to the negative direct current bus.

Each-phase rectifier circuit in the Vienna rectifier in this implementation includes one transformer, and each of the primary-side winding and the secondary-side winding of the transformer is corresponding to one rectifier bridge arm. This improves power of the Vienna rectifier, and can be used in a scenario with larger power.

In a possible implementation, the Vienna rectifier further includes an electromagnetic interference EMI filter. The three-phase rectifier circuit is connected to the three-phase alternating current source through the EMI filter. A maximum phase deviation caused by the EMI filter to the current phase of the i^{th}-phase rectifier circuit is a sixth angle. The second angle is greater than or equal to a difference between absolute values of the first angle and the sixth angle and is less than or equal to a sum of the absolute values of the first angle and the sixth angle. The third angle is greater than or equal to the difference between the absolute values of the first angle and the sixth angle and is less than or equal to the sum of the absolute values of the first angle and the sixth angle.

The sixth angle in this implementation may be preset, so that the Vienna rectifier performs reactive power adjustment more accurately.

According to a second aspect, this application further provides a Vienna rectifier control method. The method is applied to a Vienna rectifier. The Vienna rectifier includes a three-phase rectifier circuit and a controller, an input end of each-phase rectifier circuit of the three-phase rectifier circuit is connected to a one-phase alternating current source of a three-phase alternating current source, an output end of each-phase rectifier circuit of the three-phase rectifier circuit is connected to an output end of the Vienna rectifier, and the method includes:
controlling, when a voltage phase of an i^{th}-phase rectifier circuit precedes a current phase of the i^{th}-phase rectifier circuit by a first angle, a switch of the i^{th}-phase rectifier circuit to be turned on within a second angle after a voltage of the i^{th}-phase rectifier circuit reaches a zero crossing point, where the second angle is greater than or equal to the first angle, and i=1, 2, or 3; and
controlling, when the current phase of the i^{th}-phase rectifier circuit precedes the voltage phase of the i^{th}-phase rectifier circuit by the first angle, the switch of the i^{th}-phase rectifier circuit to be turned on within a third angle before the voltage of the i^{th}-phase rectifier circuit reaches the zero crossing point, where the third angle is greater than or equal to the first angle.

By using the control method provided in this application, the Vienna rectifier can implement reactive power adjustment, and improve practicability.

In a possible implementation, the second angle is less than or equal to 30°, and the third angle is less than or equal to 30°.

In a possible implementation, the controlling, when a voltage phase of an i^{th}-phase rectifier circuit precedes a current phase of the i^{th}-phase rectifier circuit by a first angle, a switch of the i^{th}-phase rectifier circuit to be turned on within a second angle after a voltage of the i^{th}-phase rectifier circuit reaches a zero crossing point specifically includes:
when the voltage phase of the i^{th}-phase rectifier circuit precedes the current phase of the i^{th}-phase rectifier circuit by the first angle, controlling the switch of the i^{th}-phase rectifier circuit to be turned on within a range from a fourth angle before the voltage of the i^{th}-phase rectifier circuit reaches the zero crossing point to the second angle after the voltage of the i^{th}-phase rectifier circuit reaches the zero crossing point, where the fourth angle is less than or equal to the second angle; and
the controlling, when the current phase of the i^{th}-phase rectifier circuit of the three-phase rectifier circuit precedes the voltage phase of the i^{th}-phase rectifier circuit by the first angle, the switch of the i^{th}-phase rectifier circuit to be turned on within a third angle before the voltage of the i^{th}-phase rectifier circuit reaches the zero crossing point specifically includes:
   when the current phase of the i^{th}-phase rectifier circuit precedes the voltage phase of the i^{th}-phase rectifier circuit by the first angle, controlling the switch of the i^{th}-phase rectifier circuit to be turned on within a range from a fifth angle before the voltage of the i^{th}-phase rectifier circuit reaches the zero crossing point to the third angle after the voltage of the i^{th}-phase rectifier circuit reaches the zero crossing point, where the fifth angle is less than or equal to the third angle.

In a possible implementation, the fourth angle is equal to the fifth angle.

In a possible implementation, the second angle is equal to the third angle.

In a possible implementation, the Vienna rectifier further includes an electromagnetic interference EMI filter, the three-phase rectifier circuit is connected to the three-phase alternating current source through the EMI filter, and the method further includes:
determining that a maximum phase deviation caused by the EMI filter to the current phase of the i^{th}-phase rectifier circuit is a sixth angle; and
adjusting the second angle and the third angle based on the sixth angle, where the second angle is greater than or equal to a difference between absolute values of the first angle and the sixth angle and is less than or equal to a sum of the absolute values of the first angle and the sixth angle, and the third angle is greater than or equal to the difference between the absolute values of the first angle and the sixth angle and is less than or equal to the sum of the absolute values of the first angle and the sixth angle.

The sixth angle in this implementation may be preset, so that the Vienna rectifier performs reactive power adjustment more accurately.

According to a third aspect, this application further provides a charging pile. The charging pile is configured to charge an electric vehicle. The charging pile includes the Vienna rectifier provided in the foregoing implementations, and further includes a direct current/direct current conversion circuit. An input end of the Vienna rectifier is connected to a three-phase alternating current circuit, and the Vienna rectifier is used as a power factor correction (Power Factor Correction, PFC) circuit of the charging pile. An input end of the direct current/direct current conversion circuit is connected to an output end of the Vienna rectifier, and an output end of the direct current/direct current conversion circuit is an output end of the charging pile. The Vienna rectifier is configured to convert an alternating current provided by the three-phase alternating current circuit into a direct current. The direct current/direct current conversion circuit is configured to perform direct current conversion on the direct current output by the Vienna rectifier.

The Vienna rectifier used in the charging pile provided in this application supports reactive power adjustment, improves practicability, and reduces hardware costs. In addition, according to the foregoing control method provided in this application, the common-mode voltage injected into the Vienna rectifier is smoothly transitioned without a sudden change, stability of the common-mode voltage is improved, and common-mode interference is reduced, so that running can be implemented more stably.

### BRIEF DESCRIPTION OF DRAWINGS

FIG. 1 is a schematic diagram of a charging pile;
FIG. 2 is a circuit diagram of a Vienna rectifier;
FIG. 3 is a schematic diagram of generating a PWM signal;
FIG. 4 is a waveform diagram of a power grid voltage and a power grid current corresponding to FIG. 2;
FIG. 5 is a schematic diagram of a Vienna rectifier according to an embodiment of this application;
FIG. 6A is a waveform diagram 1 according to an embodiment of this application;
FIG. 6B is a waveform diagram 2 according to an embodiment of this application;
FIG. 7 is a schematic diagram of another Vienna rectifier according to an embodiment of this application;
FIG. 8 is a waveform diagram 3 according to an embodiment of this application;
FIG. 9 is a waveform diagram 4 according to an embodiment of this application;
FIG. 10 is a waveform diagram 5 according to an embodiment of this application;
FIG. 11 is a schematic diagram of still another Vienna rectifier according to an embodiment of this application;
FIG. 12A is a schematic diagram of a single-phase rectifier circuit in a Vienna rectifier according to an embodiment of this application;
FIG. 12B is a schematic diagram of a single-phase rectifier circuit in another Vienna rectifier according to an embodiment of this application;
FIG. 12C is a schematic diagram of a single-phase rectifier circuit in still another Vienna rectifier according to an embodiment of this application;
FIG. 13 is a schematic diagram of yet another Vienna rectifier according to an embodiment of this application;
FIG. 14 is a flowchart of a Vienna rectifier control method according to an embodiment of this application;
FIG. 15 is a flowchart of another Vienna rectifier control method according to an embodiment of this application; and
FIG. 16 is a schematic diagram of a charging pile according to an embodiment of this application.

### DESCRIPTION OF EMBODIMENTS

To make persons skilled in the art better understand technical solutions provided in embodiments of this application, the following first describes an application scenario of a Vienna rectifier provided in this application.

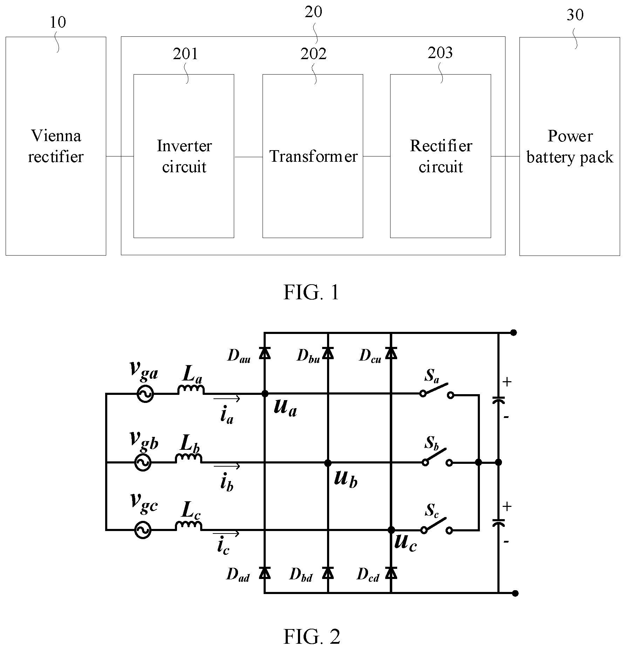

FIG. 1 is a schematic diagram of a charging pile.

The charging pile shown in the figure includes a Vienna rectifier 10 and a direct current/direct current converter 20.

The direct current/direct current converter 20 specifically includes an inverter circuit 201, a transformer 202, and a rectifier circuit 203.

An input end of the Vienna rectifier 10 is connected to a three-phase alternating current, and is configured to convert an alternating current into a direct current and transmit the direct current to the direct current/direct current converter 20.

The inverter circuit 201 is configured to convert the direct current into an alternating current and transmit the alternating current to a primary-side winding of the transformer 202, so that a secondary-side winding of the transformer 20 generates an alternating current. The inverter circuit 201 may also be referred to as a direct current (Direct Current, DC)/alternating current (Alternating Current, AC) conversion circuit. The rectifier circuit 203 converts the alternating current generated by the secondary-side winding of the transformer 202 into a direct current, to charge a power battery pack 40.

A power factor, also referred to as a PF, is a ratio of active power consumed by a load to apparent power consumed by the load. A value of the ratio ranges from 0 to 1. A low power factor usually indicates high reactive power that is of a surface circuit and that is used for alternating magnetic field conversion. This reduces efficiency of a device. In an alternating current circuit, a cosine value of a phase difference Φ between a voltage phase and a current phase is a power factor, and may be represented by a symbol cosΦ.

A large charging station or a charging station in an industrial and commercial park usually has both an active load and a reactive load. To ensure that a power factor of the entire charging station or the entire industrial and commercial park is 1, an additional reactive power compensation device usually needs to be installed. If a charging pile has a reactive power adjustment/compensation function, costs of purchasing the additional device can be greatly reduced. The reactive power adjustment function also helps support an alternating current power grid when a voltage of the power grid is low. In addition, the charging pile can flexibly respond to reactive power scheduling, and is also in line with a development trend of a future energy network.

FIG. 2 is a circuit diagram of a Vienna rectifier.

The figure shows an implementation of the Vienna rectifier. The Vienna rectifier shown in the figure includes a three-phase rectifier circuit: an a-phase rectifier circuit, a b-phase rectifier circuit, and a c-phase rectifier circuit, and each-phase rectifier circuit is connected to a corresponding one-phase alternating current and is controlled by using a corresponding switch.

For each-phase rectifier circuit in the Vienna rectifier, when the switch is turned off, a current flows through diodes. In this case, an alternating current power grid and an inductor discharge together. When the switch is turned on, the inductor stores energy. A controller in the Vienna rectifier may send a pulse width modulation (Pulse width modulation, PWM) signal to each controllable switch, to control each switch to be turned on or off.

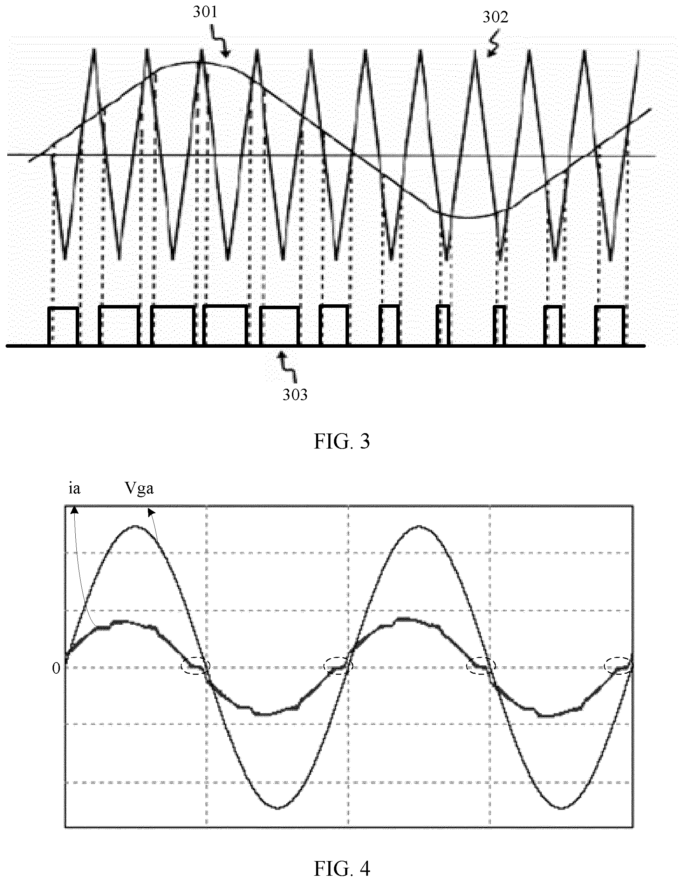

FIG. 3 is a schematic diagram of generating a PWM signal.

A sine voltage signal 301 as a modulation symbol is compared with a triangular wave voltage signal 302. A corresponding high level is output when an amplitude value of the sine voltage signal 301 is greater than an amplitude value of the triangular wave voltage signal 302, and a corresponding low level is output when the amplitude value of the sine voltage signal 301 is less than the amplitude value of the triangular wave voltage signal 302. In this way, a PWM signal 303 shown in the figure is generated.

For a Vienna rectifier, because an input end of the Vienna rectifier is connected to a three-phase alternating current, when signals obtained by subtracting modulation symbols corresponding to any two-phase rectifier circuits in the Vienna rectifier are all sine signals, a phase current of the Vienna rectifier maintains a sine wave.

The a-phase rectifier circuit in the Vienna rectifier in FIG. 2 is used as an example. Reference is made to a waveform diagram of a power grid voltage and a power grid current shown in FIG. 4. In FIG. 4, Vga represents an a-phase power grid side voltage, namely, a phase voltage, and ia represents an a-phase power grid side current, namely, a phase current. When a phase of the phase current ia precedes a phase of the phase voltage Vga by a specific angle, a power factor of the Vienna rectifier is less than 1, and in this case, ia is distorted near a zero crossing point (that is, in dashed-line box areas in the figure). This affects stability of the Vienna rectifier.

Similarly, when a phase of the phase current ia lags behind a phase of the phase voltage Vga by a specific angle, ia is also distorted near a zero crossing point.

Based on the foregoing analysis, it is generally considered in the conventional technology that Vienna rectifiers cannot implement reactive power adjustment. Therefore, currently, power factors of the Vienna rectifiers used in charging piles are all 1 when the Vienna rectifiers work. However, to implement reactive power adjustment, an additional reactive power adjustment apparatus needs to be disposed in the charging pile. This increases hardware costs of the charging pile.

To resolve the foregoing problem, this application provides a Vienna rectifier, a Vienna rectifier control method, and a charging pile. The Vienna rectifier includes a three-phase rectifier circuit and a controller. An input end of each-phase rectifier circuit of the three-phase rectifier circuit is configured to connect to a one-phase alternating current source of a three-phase alternating current source. An output end of each-phase rectifier circuit of the three-phase rectifier circuit is configured to connect to an output end of the Vienna rectifier. When a voltage phase of an i^{th}-phase rectifier circuit precedes a current phase of the i^{th}-phase rectifier circuit by a first angle, the controller controls a switch of the i^{th}-phase rectifier circuit to be turned on within a second angle after a voltage of the i^{th}-phase rectifier circuit reaches a zero crossing point. The second angle is greater than the first angle. When the current phase of the i^{th}-phase rectifier circuit of the three-phase rectifier circuit precedes the voltage phase of the i^{th}-phase rectifier circuit by the first angle, the controller controls the switch of the i^{th}-phase rectifier circuit to be turned on within a third angle before the voltage of the i^{th}-phase rectifier circuit reaches the zero crossing point. The third angle is greater than the first angle, and i=1, 2, or 3. By using the solutions provided in this application, the Vienna rectifier supports reactive power adjustment, improves practicability, and reduces hardware costs of the charging pile.

To make persons skilled in the art understand the solutions in this application better, the following describes the technical solutions in embodiments of this application with reference to the accompanying drawings in embodiments of this application.

Terms such as "first" and "second" in descriptions of this application are used only for the purpose of description, and shall not be understood as an indication or implication of relative importance or an implicit indication of a quantity of indicated technical features.

In addition, nouns of locality such as "up" and "down" in this application may be defined based on, including but not limited to, example directions in which components in the accompanying drawings are placed. It should be understood that these directional terms may be relative concepts, are used for relative description and clarification, and may accordingly vary with changes of the directions in which the components in the accompanying drawings are placed.

In this application, unless otherwise clearly specified and limited, a term "connection" should be understood in a broad sense. For example, a "connection" may be a fixed connection, may be a detachable connection, or may mean an integrated structure; or may be a direct connection, or may be an indirect connection through an intermediary.

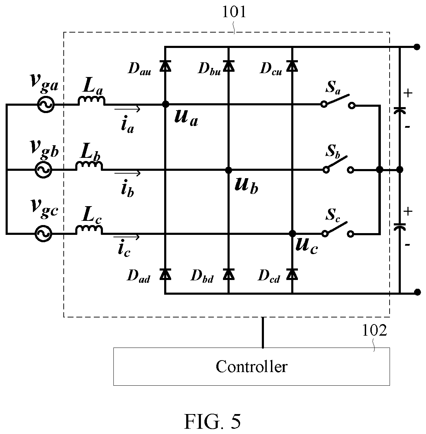

FIG. 5 is a schematic diagram of a Vienna rectifier according to an embodiment of this application.

An input end of the Vienna rectifier is connected to a three-phase alternating current source, and the Vienna rectifier includes a three-phase rectifier circuit 101 and a controller 102.

The three-phase rectifier circuit 101 shown in the figure includes an a-phase rectifier circuit, a b-phase rectifier circuit, and a c-phase rectifier circuit. An input end of each-phase rectifier circuit is connected to a one-phase alternating current source of the three-phase alternating current source. To be specific, an input end of the a-phase rectifier circuit is connected to an a-phase alternating current source, an input end of the b-phase rectifier circuit is connected to a b-phase alternating current source, and an input end of the c-phase rectifier circuit is connected to a c-phase alternating current source.

An output end of each-phase rectifier circuit of the three-phase rectifier circuit is configured to connect to an output end of the Vienna rectifier. The output end of the Vienna rectifier outputs a direct current, and therefore the output end of the Vienna rectifier is connected to direct current buses.

Each-phase rectifier circuit in the Vienna rectifier includes a switch. In the Vienna rectifier shown in FIG. 5, the a-phase rectifier circuit includes a switch Sa, the b-phase rectifier circuit includes a switch Sb, and the c-phase rectifier circuit includes a switch Sc.

The following first describes a working principle when a voltage phase precedes a current phase.

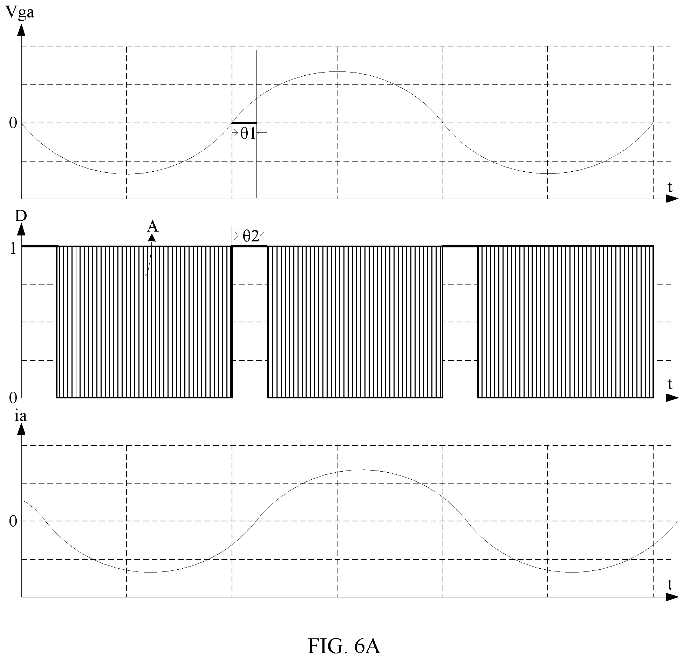

FIG. 6A is a waveform diagram 1 according to an embodiment of this application.

The following uses an example for description in which an i^{th}-phase rectifier circuit is the a-phase rectifier circuit. A "Vga-t" waveform in FIG. 6A represents a correspondence between a phase voltage Vga of the a-phase rectifier circuit and time t.

A "D-t" waveform in FIG. 6A represents a correspondence between a duty cycle D of a control signal of the switch of the a-phase rectifier circuit and time t. In an area A in the waveform, the controller uses a PWM signal to control a working status of the switch of the a-phase rectifier circuit. A specific change of a duty cycle in the area A is related to an actual working status of the Vienna rectifier. Specifically, reference may be made to FIG. 3. The PWM signal used to control the switch of the a-phase rectifier circuit, namely, the PWM signal 303 in FIG. 3, is generated through comparison between the sine voltage signal 301 and the triangular wave voltage signal 302. A frequency of the PWM signal is far higher than a frequency of the alternating current source, that is, far higher than a frequency of a voltage waveform of the a-phase rectifier circuit. Therefore, the duty cycle of the switch of the a-phase rectifier circuit changes rapidly. A correspondence between a duty cycle and time in the area A shown in the figure is merely an example.

When the voltage phase precedes the current phase by a first angle θ1, the controller controls the switch of the a-phase rectifier circuit to be turned on within a second angle θ2 after a voltage reaches a zero crossing point, that is, controls the switch of the a-phase rectifier circuit to be turned on in a time period in which the voltage phase changes from zero to θ2. The second angle θ2 is greater than or equal to the first angle θ1.

In this case, the Sa is turned on, to provide a freewheeling loop for the a-phase rectifier circuit. A current flow direction is sequentially: a direct current bus midpoint, the Sa, and an inductor La, so that a current of the a-phase rectifier circuit does not suddenly change to zero but gradually decreases to zero after the voltage reaches the voltage zero crossing point. This prevents the current from generating a current platform near a current zero crossing point, to maintain a current waveform as an "ia-t" waveform shown in the figure, namely, a sine wave. In this way, reactive power adjustment is implemented.

The following describes a working principle when a current phase precedes a voltage phase.

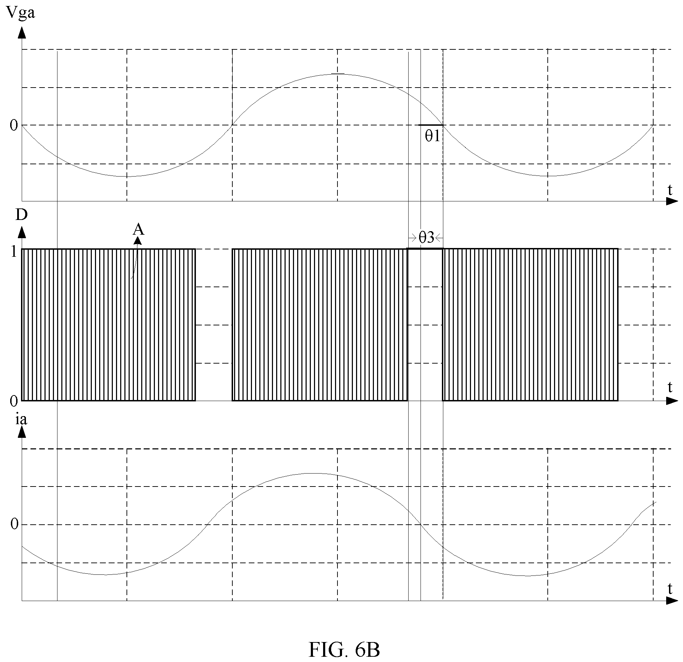

FIG. 6B is a waveform diagram 2 according to an embodiment of this application.

A "Vga-t" waveform in FIG. 6B represents a correspondence between a phase voltage Vga of the a-phase rectifier circuit and time t.

A "D-t" waveform in FIG. 6B represents a correspondence between a duty cycle D of a control signal of the switch of the a-phase rectifier circuit and time t. In an area A in the waveform, the controller uses a PWM signal to control a working status of the switch of the a-phase rectifier circuit. A specific change of a duty cycle in the area A is related to an actual working status of the Vienna rectifier. A correspondence between a duty cycle and time in the area A shown in the figure is merely an example.

When the voltage phase lags behind the current phase by a first angle θ1, the controller controls the switch of the a-phase rectifier circuit to be turned on within a third angle θ3 before a voltage reaches a zero crossing point, that is, controls the switch of the a-phase rectifier circuit to be turned on in a time period in which the voltage phase changes from θ3 to zero. The third angle θ3 is greater than or equal to the first angle θ1.

In this case, the Sa is turned on, to provide a freewheeling loop for the a-phase rectifier circuit. A current flow direction is sequentially: an inductor La, the Sa, and a direct current bus midpoint, so that a current of the a-phase rectifier circuit does not suddenly change to zero but gradually decreases to zero after the current reaches a current zero crossing point. This prevents the current from generating a current platform near the current zero crossing point, to maintain a current waveform as an "ia-t" waveform shown in the figure, namely, a sine wave. In this way, reactive power adjustment is implemented.

The controller 102 may be an application-specific integrated circuit (Application Specific Integrated Circuit, ASIC), a programmable logic device (Programmable Logic Device, PLD), a digital signal processor (Digital Signal Processor, DSP), or a combination thereof. The PLD may be a complex programmable logic device (Complex Programmable Logic Device, CPLD), a field-programmable gate array (Field-programmable Gate Array, FPGA), a generic array logic (Generic Array Logic, GAL), or any combination thereof. This is not specifically limited in this embodiment of this application.

In some embodiments, the second angle is greater than the first angle to ensure freewheeling of the rectifier circuit.

In summary, the Vienna rectifier provided in this embodiment of this application supports reactive power adjustment, improves practicability, and reduces hardware costs of a charging pile. In addition, common-mode interference can be further reduced, and a common-mode voltage of the Vienna rectifier is smoothly transitioned, so that the Vienna rectifier can run stably.

The following provides descriptions with reference to specific implementations.

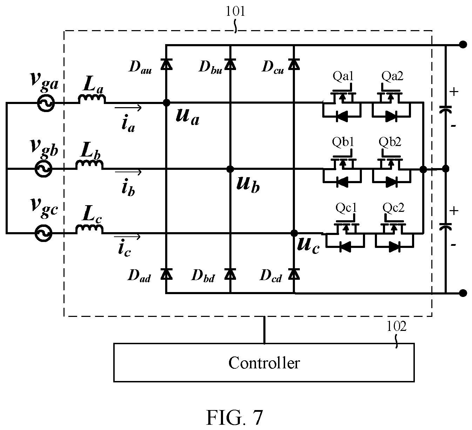

FIG. 7 is a schematic diagram of another Vienna rectifier according to an embodiment of this application.

A switch of each-phase rectifier circuit of a three-phase rectifier circuit shown in the figure includes a first switching transistor and a second switching transistor. Each-phase rectifier circuit of the three-phase rectifier circuit further includes a first diode and a second diode. The following uses an a-phase rectifier circuit as an example for description. Principles of the other two-phase rectifier circuits are similar to that of the a-phase rectifier circuit, and details are not described herein again.

The a-phase rectifier circuit specifically includes a diode Dau, a diode Dad, a switching transistor Qa1, and a switching transistor Qa2.

An anode of the Dau is connected to an input end of the a-phase rectifier circuit. The input end of the a-phase rectifier circuit is connected to an a-phase alternating current input of a three-phase alternating current source through an inductor La. A cathode of the Dau is connected to a positive direct current bus of the Vienna rectifier. The anode of the Dau is further connected to a cathode of the Dad. An anode of the Dad is connected to a negative direct current bus of the Vienna rectifier.

The anode of the Dau is further connected to a first end of the Qa1, a second end of the Qa1 is connected to a second end of the Qa2, and a first end of the Qa2 is connected to a bus midpoint of the positive direct current bus and the negative direct current bus of the Vienna rectifier.

A first capacitor of the Vienna rectifier is connected between the positive direct current bus and the bus midpoint, and a second capacitor of the Vienna rectifier is connected between the bus midpoint and the negative direct current bus.

When an a-phase switch is turned on, a path is formed between the bus midpoint and the anode of the Dau. When an a-phase current direction is shown as an ia in the figure, a controller 102 controls the Qa1 to be turned on. In this case, a current passes through the Qa1, and then passes through a diode connected in parallel to the Qa2, so that the path is formed between the bus midpoint and the anode of the Dau. When an a-phase current direction is opposite to the direction shown as the ia in the figure, the controller 102 controls the Qa2 to be turned on. In this case, a current passes through the Qa2, and then passes through a diode connected in parallel to the Qa1, so that the path is formed between the bus midpoint and the anode of the Dau. The controller may alternatively control both the Qa1 and the Qa2 to be turned on, so that the path is formed between the bus midpoint and the anode of the Dau.

The Qa1 and the Qa2 each may be an insulated gate bipolar transistor (Insulated Gate Bipolar Transistor, IGBT), a metal-oxide-semiconductor field-effect transistor (Metal Oxide Semiconductor Field Effect Transistor, MOSFET), a silicon carbide metal-oxide-semiconductor field-effect transistor (Silicon Carbide Metal Oxide Semiconductor, SiC MOSFET), or the like. This is not specifically limited in this embodiment of this application.

For example, both the Qa1 and the Qa2 are MOSFETs. In this case, the first ends of the Qa1 and the Qa2 are drains of the MOSFETs, and the first ends of the Qa1 and the Qa2 are sources of the MOSFETs.

An example in which a voltage phase of the a-phase rectifier circuit precedes a current phase of the a-phase rectifier circuit by a first angle is still used for description. Principles of the other two-phase rectifier circuits are similar to that of the a-phase rectifier circuit, and details are not described in this embodiment of this application again.

The following first describes an implementation when a second angle is equal to the first angle.

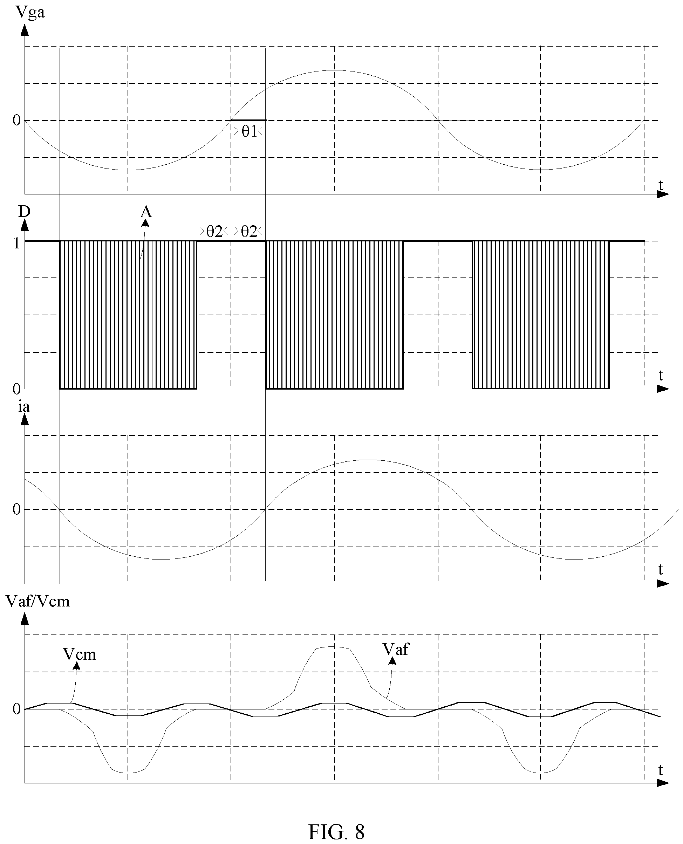

FIG. 8 is a waveform diagram 3 according to an embodiment of this application.

When the voltage phase of the a-phase rectifier circuit precedes the current phase of the a-phase rectifier circuit by the first angle θ1, the switch of the a-phase rectifier circuit is controlled to be turned on within a range from a fourth angle before a voltage of the a-phase rectifier circuit reaches a zero crossing point to the second angle θ2 after the voltage of the a-phase rectifier circuit reaches the zero crossing point. The fourth angle is less than or equal to the second angle.

An example in which the fourth angle is equal to the second angle is used in the figure, that is, the fourth angle is equal to the second angle θ2.

A "Vga-t" waveform in FIG. 8 represents a correspondence between a phase voltage Vga of the a-phase rectifier circuit and time t.

A "D-t" waveform in FIG. 8 represents a correspondence between a duty cycle D of a control signal of the switch of the a-phase rectifier circuit and time t. A correspondence between a duty cycle and time in an area A shown in the figure is merely an example.

When the voltage phase precedes the current phase by the first angle θ1, the controller controls the switch of the a-phase rectifier circuit to be turned on within a range from θ2 before the voltage reaches the zero crossing point to θ2 after the voltage reaches the zero crossing point.

In this case, the Sa is turned on, to provide a freewheeling loop for the a-phase rectifier circuit. The current flow direction is sequentially: the direct current bus midpoint, the Sa, and an inductor La, so that the current of the a-phase rectifier circuit does not suddenly change to zero but gradually decreases to zero. This prevents the current from generating a current platform near a current zero crossing point, to maintain a current waveform as an "ia-t" wave shown in FIG. 8, namely, a sine wave. In this way, reactive power adjustment is implemented.

A voltage between a midpoint of the three-phase alternating current source connected to an input end of the Vienna rectifier and the direct current bus midpoint (a midpoint of the positive direct current bus and the negative direct current bus) is a common-mode voltage of the Vienna rectifier. Larger fluctuation of the common-mode voltage indicates larger common-mode interference in the circuit. Especially when the common-mode voltage suddenly changes, the common-mode interference in the circuit is large. This affects stability of the Vienna rectifier.

A "Vaf-t" waveform in FIG. 8 represents a correspondence between a modulation voltage symbol Vaf of the a-phase rectifier circuit and time t. A "Vcm-t" waveform in FIG. 8 represents a correspondence between a common-mode voltage Vcm and time t. In this case, voltages of the modulation voltage symbol Vaf are clamped to zero from the angle θ2 on a left side of the zero crossing point to the angle θ2 on a right side of the zero crossing point. Reference is made to the "Vcm-t" waveform. The common-mode voltage Vcm in this case is smoothly transitioned without a sudden change. Therefore, the fourth angle is set, to further improve stability of the common-mode voltage of the Vienna rectifier, and reduce the common-mode interference, so that the Vienna rectifier can run more stably.

The following describes an implementation when the second angle is greater than the first angle.

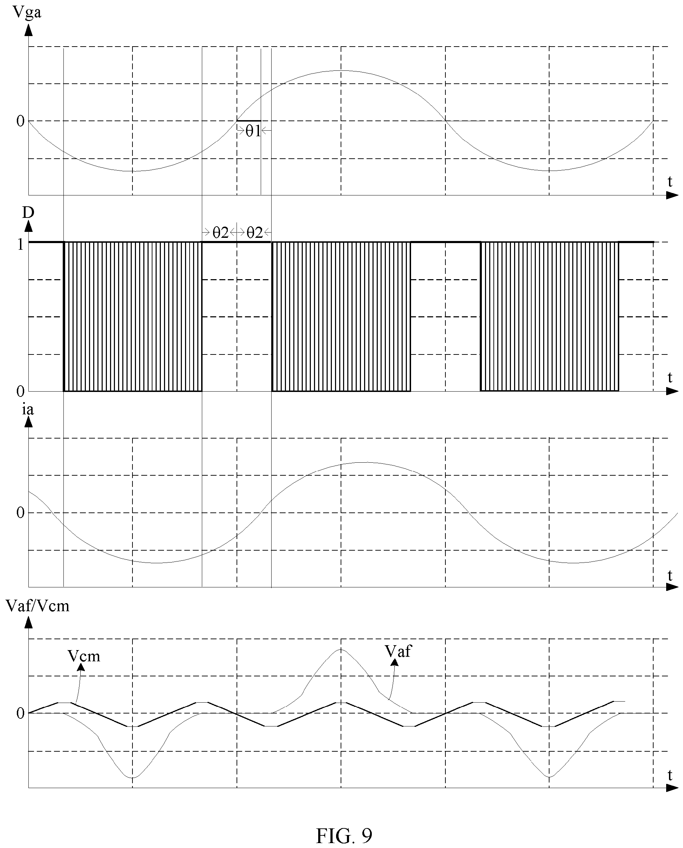

FIG. 9 is a waveform diagram 4 according to an embodiment of this application.

When the voltage phase of the a-phase rectifier circuit precedes the current phase of the a-phase rectifier circuit by the first angle θ1, the switch of the a-phase rectifier circuit is controlled to be turned on within a range from a fourth angle before a voltage of the a-phase rectifier circuit reaches a zero crossing point to the second angle θ2 after the voltage of the a-phase rectifier circuit reaches the zero crossing point. The fourth angle is less than or equal to the second angle.

An example in which the fourth angle is equal to the second angle is used in the figure, that is, the fourth angle is equal to the second angle θ2.

When the voltage phase precedes the current phase by the first angle θ1, the controller controls the switch of the a-phase rectifier circuit to be turned on within a range from θ2 before the voltage reaches the zero crossing point to θ2 after the voltage reaches the zero crossing point. In this case, the Sa is turned on, to provide a freewheeling loop for the a-phase rectifier circuit, so that the current of the a-phase rectifier circuit does not suddenly change to zero but gradually decreases to zero. This prevents the current from generating a current platform near a current zero crossing point, to maintain a current waveform as an "ia-t" wave shown in FIG. 9, namely, a sine wave. In this way, reactive power adjustment is implemented. That θ2 is greater than θ1 can ensure that the current does not generate the platform near the current zero crossing point.

In this case, voltages of the modulation voltage symbol Vaf are clamped to zero from the angle θ2 on a left side of the zero crossing point to the angle θ2 on a right side of the zero crossing point.

A "Vcm-t" waveform in FIG. 9 represents a correspondence between a common-mode voltage Vcm and time t. Reference is made to the "Vcm-t" waveform. The common-mode voltage Vcm in this case is smoothly transitioned without a sudden change. Therefore, the fourth angle is set, to further improve stability of the common-mode voltage of the Vienna rectifier, and reduce common-mode interference, so that the Vienna rectifier can run more stably.

In addition, when the second angle is greater than the first angle, the common-mode voltage of the Vienna rectifier is smoother, and the common-mode interference is smaller.

When the current phase of the a-phase rectifier circuit precedes the voltage phase of the a-phase rectifier circuit by the first angle, the controller controls the switch of the a-phase rectifier circuit to be turned on within a range from a fifth angle before the voltage of the a-phase rectifier circuit reaches the zero crossing point to a third angle after the voltage of the a-phase rectifier circuit reaches the zero crossing point, where the fifth angle is less than or equal to the third angle. A principle in this case is similar to that in the foregoing descriptions, and details are not described in this embodiment of this application again.

In a possible implementation, when the fourth angle is equal to the fifth angle and the second angle is equal to the third angle in the foregoing descriptions, symmetry of the common-mode voltage can be improved, so that the common-mode voltage is smoother, and the Vienna rectifier can run more stably. In addition, control difficulty of the controller is further simplified, and it is convenient for the controller to control the switch.

In summary, the Vienna rectifier provided in this embodiment of this application supports a reactive power adjustment function, and improves practicability. In addition, when reactive power adjustment is implemented, the common-mode voltage can be smoothly transitioned without a sudden change, and the common-mode interference is reduced, so that stability of the Vienna rectifier during reactive power adjustment is improved.
The following specifically describes an application scenario of the Vienna rectifier provided in this application.

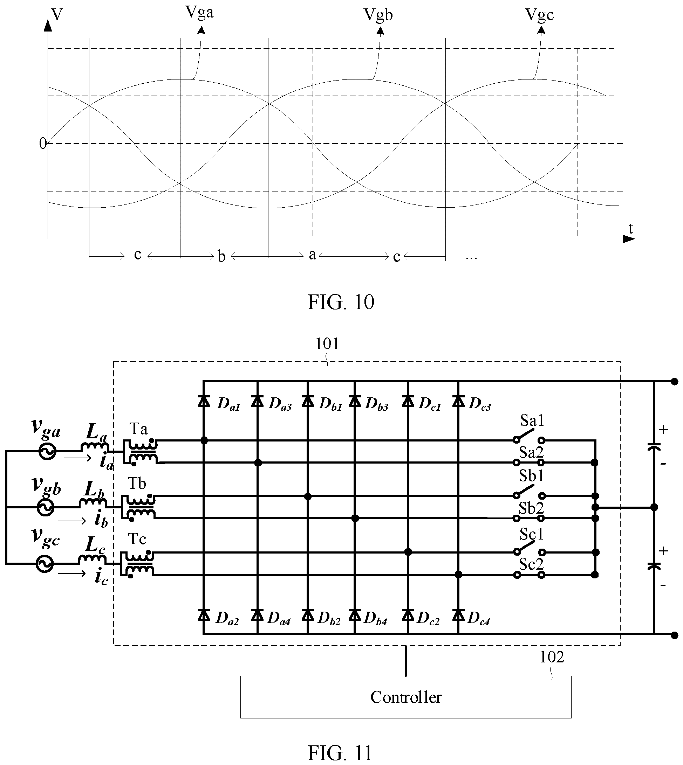

FIG. 10 is a waveform diagram 5 according to an embodiment of this application.

The Vienna rectifier in this embodiment of this application supports reactive power adjustment, and may be used as a power factor correction circuit. Typically, the Vienna rectifier is used in a charging pile of an electric vehicle. An input end of the Vienna rectifier is connected to a three-phase alternating current circuit. In this case, input voltages of the phase rectifier circuits of the Vienna rectifier are respectively a Vga, a Vgb, and a Vgc shown in the figure.

As shown in the figure, a phase of the Vga precedes a phase of the Vgb by 120°, and the phase of the Vgb precedes a phase of the Vgc by 120°.

According to characteristics of the three-phase alternating current voltages shown in the figure, only a voltage of a rectifier circuit corresponding to an intermediate phase voltage can be clamped to zero. To be specific, a voltage of the c-phase rectifier circuit can be clamped to zero in a time period c, a voltage of the b-phase rectifier circuit can be clamped to zero in a time period b, and a voltage of the a-phase rectifier circuit can be clamped to zero in a time period a.

For each-phase rectifier circuit in the Vienna rectifier, a maximum angle at which a phase voltage precedes a phase current is 30°, and a corresponding power factor is cos(30)°, which is approximately 0.866; and a maximum angle at which the phase voltage lags behind the phase current is 30°, and a corresponding power factor is -cos(30)°, which is approximately -0.866. Therefore, an absolute value of the power factor can be adjusted between [0.866, 1].

In summary, the Vienna rectifier provided in this embodiment of this application supports reactive power adjustment, and improves practicability of the Vienna rectifier.

The following describes another implementation of the Vienna rectifier.

FIG. 11 is a schematic diagram of still another Vienna rectifier according to an embodiment of this application.

A switch of each-phase rectifier circuit of a three-phase rectifier circuit shown in the figure includes a first switching transistor and a second switching transistor. Each-phase rectifier circuit of the three-phase rectifier circuit further includes a first diode, a second diode, a third switching transistor, a fourth switching transistor, and a transformer. The following uses an a-phase rectifier circuit as an example for description. Principles of the other two-phase rectifier circuits are similar to that of the a-phase rectifier circuit, and details are not described herein again.

The a-phase rectifier circuit specifically includes a diode Da1, a diode Da2, a diode Da3, a diode Da4, a switching transistor Sa1, a switching transistor Sa2, and a transformer Ta.

A first end of a primary-side winding of the Ta is connected to an anode of the Da1 and a first end of the Sa1, and a second end of the primary-side winding of the Ta is connected to a first end of a secondary-side winding of the Ta and an input end of the a-phase rectifier circuit. The input end of the a-phase rectifier circuit is connected to an a-phase alternating current input of a three-phase alternating current source through an inductor La.

A second end of the secondary-side winding of the Ta is connected to a first end of the Sa2.

A second end of the Sa1 and a second end of the Sa2 are connected to a bus midpoint of a positive direct current bus and a negative direct current bus.

The first end of the primary-side winding of the Ta is connected to the anode of the Da1 and a cathode of the Da2, a cathode of the Da1 is connected to the positive direct current bus, and an anode of the Da2 is connected to the negative direct current bus.

The second end of the secondary-side winding of the Ta is connected to an anode of the Da3 and a cathode of the Da4, a cathode of the Da3 is connected to the positive direct current bus, and an anode of the Da4 is connected to the negative direct current bus.

A first capacitor of the Vienna rectifier is connected between the positive direct current bus and the bus midpoint, and a second capacitor of the Vienna rectifier is connected between the bus midpoint and the negative direct current bus.

The Sa1 and the Sa2 each may be an IGBT, a MOSFET, a SiC MOSFET, a relay, or the like. This is not specifically limited in this embodiment of this application.

When a voltage phase precedes a current phase by a first angle, a controller controls the switches Sa1 and Sa2 of the a-phase rectifier circuit to be turned on within a second angle after a voltage reaches a zero crossing point, that is, controls the switch of the a-phase rectifier circuit to be turned on in a time period in which the voltage phase changes from zero to the second angle. The second angle is greater than or equal to the first angle.

In this case, the Sa1 and the Sa2 are turned on, to provide a freewheeling loop for the a-phase rectifier circuit. A current flows to the inductor La after sequentially passing through the direct current bus midpoint, the switch, and the transformer Ta, so that the current of the a-phase rectifier circuit does not suddenly change to zero but gradually decreases to zero after the voltage reaches the voltage zero crossing point. This prevents the current from generating a current platform near a current zero crossing point, to maintain a current waveform as a sine wave. In this way, reactive power adjustment is implemented.

When the voltage phase lags behind the current phase by the first angle, the controller controls the switches Sa1 and Sa2 of the a-phase rectifier circuit to be turned on within a third angle before the voltage reaches the zero crossing point, that is, controls the switch of the a-phase rectifier circuit to be turned on in a time period in which the voltage phase changes from the third angle to zero. The third angle is greater than or equal to the first angle.

In this case, the Sa1 and the Sa2 are turned on, to provide a freewheeling loop for the a-phase rectifier circuit. A current flows to the direct current bus midpoint after sequentially passing through the inductor La, the transformer Ta, and the switch, so that the current of the a-phase rectifier circuit does not suddenly change to zero but gradually decreases to zero after the current reaches a current zero crossing point. This prevents the current from generating a current platform near the current zero crossing point, to maintain a current waveform as a sine wave. In this way, reactive power adjustment is implemented.

Further, to reduce common-mode interference of the Vienna rectifier, when the voltage phase of the a-phase rectifier circuit precedes the current phase of the a-phase rectifier circuit by the first angle, the controller controls the switch of the a-phase rectifier circuit to be turned on within a range from a fourth angle before the voltage of the a-phase rectifier circuit reaches the zero crossing point to the second angle after the voltage of the a-phase rectifier circuit reaches the zero crossing point, where the fourth angle is less than or equal to the second angle.

When the current phase of the a-phase rectifier circuit precedes the voltage phase of the a-phase rectifier circuit by the first angle, the controller controls the switch of the a-phase rectifier circuit to be turned on within a range from a fifth angle before the voltage of the a-phase rectifier circuit reaches the zero crossing point to the third angle after the voltage of the a-phase rectifier circuit reaches the zero crossing point, where the fifth angle is less than or equal to the third angle.

In summary, the Vienna rectifier provided in this embodiment of this application supports reactive power adjustment, improves practicability, and reduces hardware costs of a charging pile. In addition, the common-mode interference can be further reduced, and a common-mode voltage of the Vienna rectifier is smoothly transitioned, so that the Vienna rectifier can run stably. Each-phase rectifier circuit in the Vienna rectifier includes one transformer, and each of the primary-side winding and the secondary-side winding of the transformer is corresponding to one rectifier bridge arm. This improves power of the Vienna rectifier, and can be used in a scenario with larger power.

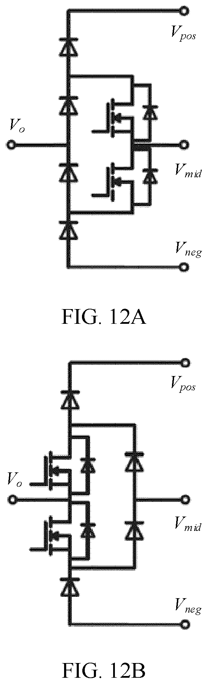

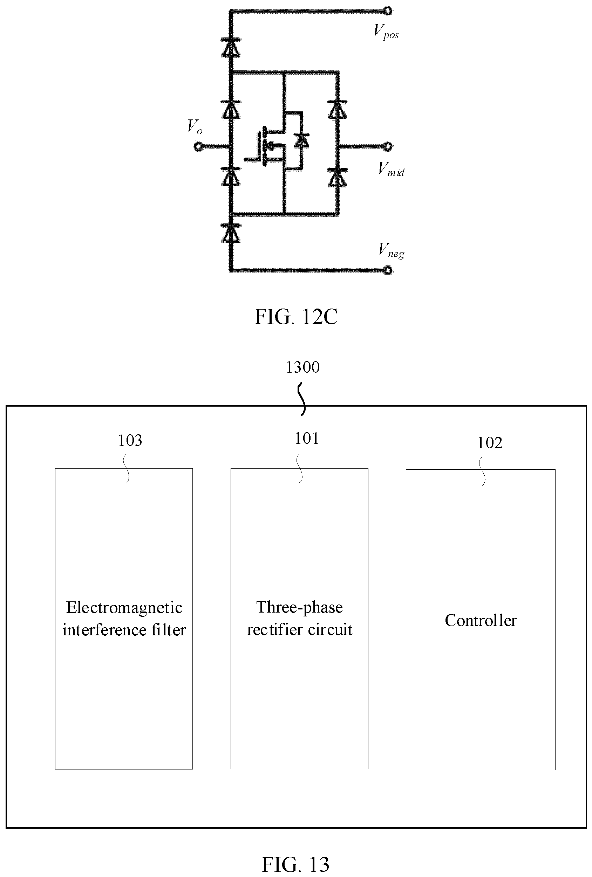

The foregoing merely provides a possible implementation of the Vienna rectifier. In addition, reference may be made to schematic diagrams of single-phase rectifier circuits of Vienna rectifiers shown in FIG. 12A to FIG. 12C. Vpos ends in FIG. 12A to FIG. 12C are connected to positive direct current buses of the Vienna rectifiers, Vneg ends in FIG. 12A to FIG. 12C are connected to negative direct current buses of the Vienna rectifiers, and Vmid ends in FIG. 12A to FIG. 12C are connected to direct current bus midpoints of the Vienna rectifiers.

The following describes another implementation of the Vienna rectifier.

FIG. 13 is a schematic diagram of yet another Vienna rectifier according to an embodiment of this application.

A difference between the Vienna rectifier 1300 shown in the figure and the Vienna rectifiers in the foregoing embodiments lies in that the Vienna rectifier 1300 further includes an electromagnetic interference (Electromagnetic Interference, EMI) filter 103.

The three-phase rectifier circuit 101 is connected to the three-phase alternating current source through the electromagnetic interference filter 103.

The electromagnetic interference filter 103 is a low-pass filter, and is configured to transmit power of the power source to a device without attenuation and attenuate an EMI signal transmitted by the power source, to protect the circuit. In addition, the electromagnetic interference filter 103 can effectively control an EMI signal generated by the Vienna rectifier itself, to prevent the EMI signal from entering a power grid and polluting an electromagnetic environment.

The electromagnetic interference filter 103 includes a capacitor. The capacitor affects a current phase, thereby affecting a phase difference between a voltage and a current.

A maximum phase deviation caused by the electromagnetic interference filter 103 to the current phase of the i^{th}-phase rectifier circuit is a sixth angle.

The second angle is greater than or equal to a difference between absolute values of the first angle and the sixth angle and is less than or equal to a sum of the absolute values of the first angle and the sixth angle.

The third angle is greater than or equal to the difference between the absolute values of the first angle and the sixth angle and is less than or equal to the sum of the absolute values of the first angle and the sixth angle.

The sixth angle may be preset, so that the Vienna rectifier performs reactive power adjustment more accurately.

An embodiment of this application further provides a Vienna rectifier control method, to control a Vienna rectifier to implement a reactive power adjustment function. The following provides specific descriptions with reference to the accompanying drawings.

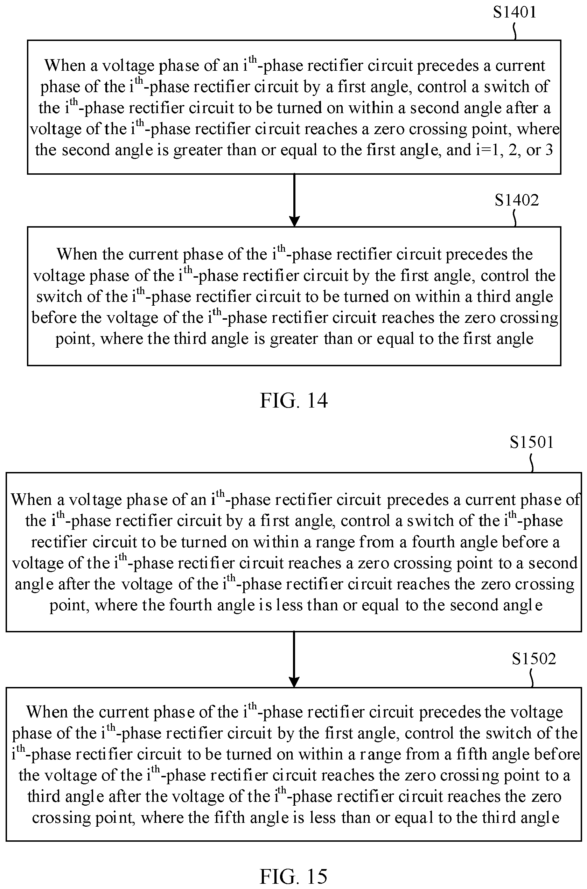

FIG. 14 is a flowchart of a Vienna rectifier control method according to an embodiment of this application.

The method includes the following steps.

S1401: When a voltage phase of an i^{th}-phase rectifier circuit precedes a current phase of the i^{th}-phase rectifier circuit by a first angle, control a switch of the i^{th}-phase rectifier circuit to be turned on within a second angle after a voltage of the i^{th}-phase rectifier circuit reaches a zero crossing point, where the second angle is greater than or equal to the first angle, and i=1, 2, or 3.

The switch of the i^{th}-phase rectifier circuit is turned on, to provide a freewheeling loop for the i^{th}-phase rectifier circuit. A current sequentially passes through a direct current bus midpoint, the switch of the i^{th}-phase rectifier circuit, and an inductor La, so that the current of the i^{th}-phase rectifier circuit does not suddenly change to zero but gradually decreases to zero. This prevents the current from generating a current platform near a current zero crossing point, to maintain a current waveform as a sine wave. In this way, reactive power adjustment is implemented. That a third angle is greater than or equal to the first angle can ensure that the current does not generate the platform near the current zero crossing point.

S 1402: When the current phase of the i^{th}-phase rectifier circuit precedes the voltage phase of the i^{th}-phase rectifier circuit by the first angle, control the switch of the i^{th}-phase rectifier circuit to be turned on within a third angle before the voltage of the i^{th}-phase rectifier circuit reaches the zero crossing point, where the third angle is greater than or equal to the first angle.

The switch of the i^{th}-phase rectifier circuit is turned on, to provide a freewheeling loop for an a-phase rectifier circuit, so that a current of the a-phase rectifier circuit does not suddenly change to zero but gradually decreases to zero. This prevents the current from generating a current platform near a current zero crossing point, to maintain a current waveform as a sine wave. In this way, reactive power adjustment is implemented. That the third angle is greater than or equal to the first angle can ensure that the current does not generate the platform near the current zero crossing point.

In a possible implementation, the second angle is equal to the third angle. In this way, control difficulty is simplified, and it is convenient for a controller to control the switch.

In summary, by using the control method, a Vienna rectifier can support reactive power adjustment, improve practicability, and reduce hardware costs of a charging pile that uses the Vienna rectifier.

The following provides further descriptions with reference to specific implementations.

FIG. 15 is a flowchart of another Vienna rectifier control method according to an embodiment of this application.

The illustrated method includes the following steps:
S1501: When the voltage phase of the i^{th}-phase rectifier circuit precedes the current phase of the i^{th}-phase rectifier circuit by the first angle, control the switch of the i^{th}-phase rectifier circuit to be turned on within a range from a fourth angle before the voltage of the i^{th}-phase rectifier circuit reaches the zero crossing point to the second angle after the voltage of the i^{th}-phase rectifier circuit reaches the zero crossing point, where the fourth angle is less than or equal to the second angle.
S1502: When the current phase of the i^{th}-phase rectifier circuit precedes the voltage phase of the i^{th}-phase rectifier circuit by the first angle, control the switch of the i^{th}-phase rectifier circuit to be turned on within a range from a fifth angle before the voltage of the i^{th}-phase rectifier circuit reaches the zero crossing point to the third angle after the voltage of the i^{th}-phase rectifier circuit reaches the zero crossing point, where the fifth angle is less than or equal to the third angle.

In some embodiments, when the fourth angle is equal to the fifth angle and the second angle is equal to the third angle, symmetry of a common-mode voltage can be improved, so that the common-mode voltage is smoother, and a Vienna rectifier can run more stably. In addition, control difficulty of a controller is further simplified, and it is convenient for the controller to control the switch.

In some embodiments, a three-phase rectifier circuit is connected to a three-phase alternating current source through an EMI filter. The EMI filter includes a capacitor. The capacitor affects a current phase, thereby affecting a phase difference between a voltage and a current. To reduce impact of the EMI filter on reactive power adjustment, the method further includes the following steps:
determining that a maximum phase deviation caused by the EMI filter to the current phase of the i^{th}-phase rectifier circuit is a sixth angle; and
adjusting the second angle and the third angle based on the sixth angle.

The sixth angle may be preset.

In a possible adjustment manner, the second angle is greater than or equal to a difference between absolute values of the first angle and the sixth angle and is less than or equal to a sum of the absolute values of the first angle and the sixth angle, and the third angle is greater than or equal to the difference between the absolute values of the first angle and the sixth angle and is less than or equal to the sum of the absolute values of the first angle and the sixth angle.

The second angle and the third angle are adjusted properly, so that the Vienna rectifier performs reactive power adjustment more accurately.

In summary, by using the control method, the Vienna rectifier can implement a reactive power adjustment function. In addition, the common-mode voltage can be smoothly transitioned without a sudden change, and common-mode interference is reduced, so that stability of the Vienna rectifier during reactive power adjustment is improved.

Based on the Vienna rectifiers provided in the foregoing embodiments, an embodiment of this application further provides a charging pile. The following provides specific descriptions with reference to the accompanying drawings.

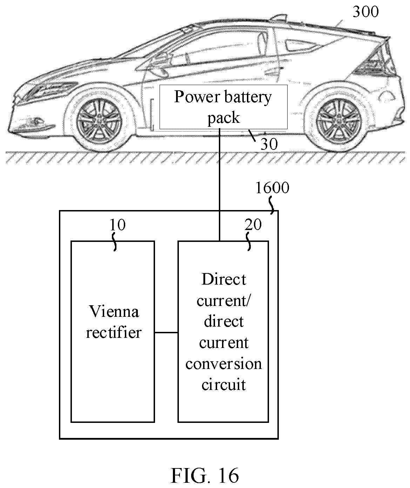

FIG. 16 is a schematic diagram of a charging pile according to an embodiment of this application.

The charging pile 1600 shown in the figure includes a Vienna rectifier 10 and a direct current/direct current conversion circuit 20.

An input end of the charging pile 1600 is connected to a three-phase alternating current source, an output end of the charging pile 1600 is configured to connect to a power battery pack 30 of an electric vehicle 300, and the charging pile 1600 is configured to charge the power battery pack 30.

An input end of the Vienna rectifier 10 is the input end of the charging pile 1600, an output end of the Vienna rectifier 10 is connected to an input end of the direct current/direct current conversion circuit 20, and an output end of the direct current/direct current conversion circuit 20 is the output end of the charging pile 1600.

Specifically, the charging pile 1600 includes an interface, the interface is configured to connect to a charging interface of the electric vehicle 300 through a cable, and the output end of the direct current/direct current conversion circuit 20 is connected to the interface of the charging pile 1600.

The Vienna rectifier 10 is configured to convert an alternating current provided by the three-phase alternating current source into a direct current, and transmit the direct current to the direct current/direct current conversion circuit 20. The Vienna rectifier 10 is also used as a power factor correction (Power Factor Correction, PFC) circuit.

For a working principle and an implementation of the Vienna rectifier, reference may be made to related descriptions in the foregoing embodiments. Details are not described in this embodiment of this application again.

The direct current/direct current conversion circuit 20 is configured to perform direct current conversion on the direct current output by the Vienna rectifier 10.

In summary, when the voltage phase of the i^{th}-phase rectifier circuit in the Vienna rectifier used in the charging pile precedes or lags behind the current phase of the i^{th}-phase rectifier circuit, the power factor of the Vienna rectifier during work is less than 1. When the voltage phase of the i^{th}-phase rectifier circuit precedes the current by the first angle, the controller controls the switch of the i^{th}-phase rectifier circuit to be turned on within the second angle after the voltage reaches the zero crossing point, to provide the freewheeling path for the i^{th}-phase rectifier circuit. Because the second angle is greater than or equal to the first angle, the current of the i^{th}-phase rectifier circuit gradually decreases to zero, to maintain the current waveform as the sine wave. When the current phase of the i^{th}-phase rectifier circuit precedes the voltage by the first angle, the current waveform can be maintained as the sine wave likewise. In this way, reactive power adjustment is implemented.

In addition, the Vienna rectifier provided in this application further enables the common-mode voltage to be smoothly transitioned without a sudden change, improves the stability of the common-mode voltage, and reduces the common-mode interference, so that the Vienna rectifier can run more stably.

It should be understood that in this application, "at least one (item)" means one or more, and "a plurality of" means two or more. A term "and/or" is used to describe an association relationship for describing associated objects and represents that three relationships may exist.

The foregoing embodiments are merely intended to describe the technical solutions of this application, but not to limit this application. Although this application is described in detail with reference to the foregoing embodiments, persons of ordinary skill in the art should understand that they can still make modifications to the technical solutions described in the foregoing embodiments or make equivalent replacements to some technical features thereof, without departing from the spirit and scope of the technical solutions of embodiments of this application.

## Claims

1. A Vienna rectifier, wherein the Vienna rectifier comprises a three-phase rectifier circuit and a controller;
an input end of each-phase rectifier circuit of the three-phase rectifier circuit is connected to a one-phase alternating current source of a three-phase alternating current source;
an output end of each-phase rectifier circuit of the three-phase rectifier circuit is connected to an output end of the Vienna rectifier; and
the controller
the controller is configured to: when a voltage phase of an i^{th}-phase rectifier circuit precedes a current phase of the i^{th}-phase rectifier circuit by a first angle, control a switch of the i^{th}-phase rectifier circuit to be turned on within a second angle after a voltage of the i^{th}-phase rectifier circuit reaches a zero crossing point, wherein the second angle is greater than or equal to the first angle; and when the current phase of the i^{th}-phase rectifier circuit of the three-phase rectifier circuit precedes the voltage phase of the i^{th}-phase rectifier circuit by the first angle, control the switch of the i^{th}-phase rectifier circuit to be turned on within a third angle before the voltage of the i^{th}-phase rectifier circuit reaches the zero crossing point, wherein the third angle is greater than or equal to the first angle, and i=1, 2, or 3.

2. The Vienna rectifier according to claim 1, wherein the second angle is less than or equal to 30°, and the third angle is less than or equal to 30°.

3. The Vienna rectifier according to claim 1, wherein the controller is specifically configured to: when the voltage phase of the i^{th}-phase rectifier circuit precedes the current phase of the i^{th}-phase rectifier circuit by the first angle, control the switch of the i^{th}-phase rectifier circuit to be turned on within a range from a fourth angle before the voltage of the i^{th}-phase rectifier circuit reaches the zero crossing point to the second angle after the voltage of the i^{th}-phase rectifier circuit reaches the zero crossing point; and when the current phase of the i^{th}-phase rectifier circuit precedes the voltage phase of the i^{th}-phase rectifier circuit by the first angle, control the switch of the i^{th}-phase rectifier circuit to be turned on within a range from a fifth angle before the voltage of the i^{th}-phase rectifier circuit reaches the zero crossing point to the third angle after the voltage of the i^{th}-phase rectifier circuit reaches the zero crossing point, wherein the fourth angle is less than or equal to the second angle, and the fifth angle is less than or equal to the third angle.

4. The Vienna rectifier according to claim 3, wherein the fourth angle is equal to the fifth angle.

5. The Vienna rectifier according to any one of claims 1 to 4, wherein the second angle is equal to the third angle.

6. The Vienna rectifier according to claim 1, wherein the Vienna rectifier comprises a positive direct current bus and a negative direct current bus, the switch of the i^{th}-phase rectifier circuit comprises a first switching transistor and a second switching transistor, and the i^{th}-phase rectifier circuit further comprises a first diode and a second diode;
an anode of the first diode is connected to an input end of the i^{th}-phase rectifier circuit, a cathode of the first diode is connected to the positive direct current bus, the anode of the first diode is connected to a cathode of the second diode, and an anode of the second diode is connected to the negative direct current bus; and
the anode of the first diode is connected to a first end of the first switching transistor, a second end of the first switching transistor is connected to a second end of the second switching transistor, and a first end of the second switching transistor is connected to a bus midpoint of the positive direct current bus and the negative direct current bus.

7. The Vienna rectifier according to claim 1, wherein the Vienna rectifier comprises a positive direct current bus and a negative direct current bus, the switch of the i^{th}-phase rectifier circuit comprises a first switching transistor and a second switching transistor, and the i^{th}-phase rectifier circuit further comprises a first diode, a second diode, a third switching transistor, a fourth switching transistor, and a transformer;
a first end of a primary-side winding of the transformer is connected to an anode of the first diode and a first end of the first switching transistor, a second end of the primary-side winding of the transformer is connected to a first end of a secondary-side winding of the transformer and an input end of the i^{th}-phase rectifier circuit, and a second end of the secondary-side winding of the transformer is connected to a first end of the second switching transistor;
a second end of the first switching transistor and a second end of the second switching transistor are connected to a bus midpoint of the positive direct current bus and the negative direct current bus;
the first end of the primary-side winding of the transformer is connected to the anode of the first diode and a cathode of the second diode, a cathode of the first diode is connected to the positive direct current bus, and an anode of the second diode is connected to the negative direct current bus; and
the second end of the secondary-side winding of the transformer is connected to an anode of the third switching transistor and a cathode of the fourth switching transistor, a cathode of the third switching transistor is connected to the positive direct current bus, and an anode of the fourth switching transistor is connected to the negative direct current bus.

8. The Vienna rectifier according to claim 1, wherein the Vienna rectifier further comprises an electromagnetic interference EMI filter;
the three-phase rectifier circuit is connected to the three-phase alternating current source through the EMI filter;
a maximum phase deviation caused by the EMI filter to the current phase of the i^{th}-phase rectifier circuit is a sixth angle;
the second angle is greater than or equal to a difference between absolute values of the first angle and the sixth angle and is less than or equal to a sum of the absolute values of the first angle and the sixth angle; and
the third angle is greater than or equal to the difference between the absolute values of the first angle and the sixth angle and is less than or equal to the sum of the absolute values of the first angle and the sixth angle.

9. A Vienna rectifier control method, wherein the Vienna rectifier comprises a three-phase rectifier circuit and a controller, an input end of each-phase rectifier circuit of the three-phase rectifier circuit is configured to connect to a one-phase alternating current source of a three-phase alternating current source, an output end of each-phase rectifier circuit of the three-phase rectifier circuit is configured to connect to an output end of the Vienna rectifier, and the method comprises:
controlling, when a voltage phase of an i^{th}-phase rectifier circuit precedes a current phase of the i^{th}-phase rectifier circuit by a first angle, a switch of the i^{th}-phase rectifier circuit to be turned on within a second angle after a voltage of the i^{th}-phase rectifier circuit reaches a zero crossing point, wherein the second angle is greater than or equal to the first angle, and i=1, 2, or 3; and
controlling, when the current phase of the i^{th}-phase rectifier circuit precedes the voltage phase of the i^{th}-phase rectifier circuit by the first angle, the switch of the i^{th}-phase rectifier circuit to be turned on within a third angle before the voltage of the i^{th}-phase rectifier circuit reaches the zero crossing point, wherein the third angle is greater than or equal to the first angle.

10. The control method according to claim 9, wherein the second angle is less than or equal to 30°, and the third angle is less than or equal to 30°.

11. The control method according to claim 9, wherein the controlling, when a voltage phase of an i^{th}-phase rectifier circuit precedes a current phase of the i^{th}-phase rectifier circuit by a first angle, a switch of the i^{th}-phase rectifier circuit to be turned on within a second angle after a voltage of the i^{th}-phase rectifier circuit reaches a zero crossing point specifically comprises:
when the voltage phase of the i^{th}-phase rectifier circuit precedes the current phase of the i^{th}-phase rectifier circuit by the first angle, controlling the switch of the i^{th}-phase rectifier circuit to be turned on within a range from a fourth angle before the voltage of the i^{th}-phase rectifier circuit reaches the zero crossing point to the second angle after the voltage of the i^{th}-phase rectifier circuit reaches the zero crossing point, wherein the fourth angle is less than or equal to the second angle; and
the controlling, when the current phase of the i^{th}-phase rectifier circuit of the three-phase rectifier circuit precedes the voltage phase of the i^{th}-phase rectifier circuit by the first angle, the switch of the i^{th}-phase rectifier circuit to be turned on within a third angle before the voltage of the i^{th}-phase rectifier circuit reaches the zero crossing point specifically comprises:
when the current phase of the i^{th}-phase rectifier circuit precedes the voltage phase of the i^{th}-phase rectifier circuit by the first angle, controlling the switch of the i^{th}-phase rectifier circuit to be turned on within a range from a fifth angle before the voltage of the i^{th}-phase rectifier circuit reaches the zero crossing point to the third angle after the voltage of the i^{th}-phase rectifier circuit reaches the zero crossing point, wherein the fifth angle is less than or equal to the third angle.

12. The control method according to claim 11, wherein the fourth angle is equal to the fifth angle.

13. The control method according to any one of claims 9 to 12, wherein the second angle is equal to the third angle.

14. The control method according to claim 9, wherein the Vienna rectifier further comprises an electromagnetic interference EMI filter, the three-phase rectifier circuit is connected to the three-phase alternating current source through the EMI filter, and the method further comprises:
determining that a maximum phase deviation caused by the EMI filter to the current phase of the i^{th}-phase rectifier circuit is a sixth angle; and
adjusting the second angle and the third angle based on the sixth angle, wherein the second angle is greater than or equal to a difference between absolute values of the first angle and the sixth angle and is less than or equal to a sum of the absolute values of the first angle and the sixth angle, and the third angle is greater than or equal to the difference between the absolute values of the first angle and the sixth angle and is less than or equal to the sum of the absolute values of the first angle and the sixth angle.

15. A charging pile, wherein the charging pile comprises the Vienna rectifier according to any one of claims 1 to 8, and further comprises a direct current/direct current conversion circuit;
an input end of the direct current/direct current conversion circuit is configured to connect to an output end of the Vienna rectifier;
an output end of the direct current/direct current conversion circuit is an output end of the charging pile; and
the direct current/direct current conversion circuit is configured to perform direct current conversion on a direct current output by the Vienna rectifier.
